# FASCICULE DE BREVET EUROPEEN

(11) **EP 2 473 376 B1**
(45) Date de publication et mention de la délivrance du brevet: **05.06.2013**
(21) Numéro de dépôt: 10763771.2
(22) Date de dépôt: 30.08.2010
(51) Int. Cl.: B60R 13/02

(54) **DISPOSITIF D'INSONORISATION POUR HABITACLE DE VÉHICULE, NOTAMMENT AUTOMOBILE**
VORRICHTUNG ZUR SCHALLDÄMPFUNG EINES INNENRAUMS EINES FAHRZEUGS, INSBESONDERE EINES KRAFTFAHRZEUGS
SOUND INSULATION FOR AN INNER SPACE OF A VEHICLE ESPECIALLY& xA;OF A MOTOR VEHICLE

(30) Priorité: 31.08.2009 FR 0955928
(43) Date de publication de la demande: 11.07.2012
(73) Titulaire: Peugeot Citroën Automobiles Société Anonyme, 78140 Vélizy Villacoublay (FR); HOWA TRAMICO, 27800 Brionne (FR)
(72) Inventeur: ROUSSEAU, Frédéric, F-78730 Ponthevrard (FR); PHILIP, Stéphan, F-91190 Gif Sur Yvette (FR); MOUGNARD, Laurent, F-61300 Saint Sulpice Sur Risle (FR); CHARY, Olivier, 27300 Bernay (FR)
(74) Mandataire: Ménès, Catherine
(86) Numéro de dépôt international: PCT/FR2010/051797
(87) Numéro de publication internationale: WO 2011/023919

(56) Documents cités:
- EP-A1- 2 052 828
- DE-A1- 4 103 039
- DE-U1-202006 008 449
- FR-A1- 2 733 933
- JP-A- 57 194 163
- JP-A- 58 177 745

## Description

La présente invention est relative à un dispositif d'insonorisation pour habitacle de véhicule, notamment automobile.

Plus particulièrement, l'invention concerne un tel dispositif qui est destiné à être interposé entre un panneau de tôle de carrosserie du véhicule et un panneau d'habillage intérieur.

Ce genre de dispositif connu est typiquement, pour un pavillon de véhicule, une plaque à base de goudron, la plaque étant collée sur le panneau de tôle de carrosserie de pavillon. Ce type de plaque à base de goudron, collée sur une zone du panneau de tôle, permet de raidir le pavillon, avec pour inconvénients : coût, masse importante, colle pouvant nuire à la santé des opérateurs qui collent la plaque dans l'usine de montage du véhicule, procédé de collage souvent contraignant. Concernant les contraintes entachant le procédé de collage, elles découlent du fait que le collage est effectué à l'intérieur du véhicule, ce qui peut d'une part obliger les opérateurs à travailler les bras levés, voire en aveugle, ou d'autre part nécessiter l'emploi de robots onéreux.

Le document JP 58 177745 A divulgue un dispositif d'insonorisation pour habitacle de véhicule, destiné à être interposé entre un panneau de tôle de carrosserie du véhicule et un panneau d'habillage intérieur et qui comporte une plaque de mousse à base de polymère imprégnée d'un adhésif, la plaque de mousse étant conformée pour être intimement en contact avec le panneau de tôle de carrosserie et le panneau d'habillage intérieur.

La présente invention a notamment pour but de remédier aux inconvénients de l'art antérieur.

A cet effet, l'invention a pour objet un dispositif d'insonorisation pour habitacle de véhicule, notamment automobile, destiné à être interposé entre un panneau de tôle de carrosserie du véhicule et un panneau d'habillage intérieur. Le dispositif comporte une plaque de mousse à base de polymère imprégnée d'un mélange de charge minérale et de liant organique, la plaque de mousse étant conformée pour être intimement en contact avec le panneau de tôle de carrosserie et le panneau d'habillage intérieur.

Dans divers modes de réalisation du dispositif selon l'invention, on peut éventuellement avoir recours en outre à l'une et/ou à l'autre des dispositions suivantes :
- le polymère de la plaque de mousse est à base de polyuréthane ;
- le liant organique du mélange est à base d'acrylique ;
- la charge minérale comporte du silicate d'alumine ;
- la charge minérale est de la craie ;
- le mélange est à 50% en masse de charge minérale et 50% en masse de liant organique ou à 60% en masse de charge minérale et 40% en masse de liant organique ;
- la plaque de mousse est de densité sensiblement égale à 18 kilogrammes par mètre cube ;
- la plaque de mousse a une épaisseur comprise entre 5 millimètres et 15 millimètres.

Par ailleurs, l'invention a également pour objet un système d'habillage intérieur pour habitacle de véhicule, notamment automobile, comportant un panneau d'habillage intérieur permettant d'habiller un panneau de tôle de carrosserie du véhicule. Le système comporte un dispositif conforme à l'invention dont la plaque de mousse est intimement solidaire d'une face supérieure du panneau d'habillage intérieur de manière que la plaque de mousse puisse être interposée entre le panneau d'habillage intérieur et le panneau de tôle de carrosserie, en étant intimement en contact avec ce dernier.

Dans un mode de réalisation de ce système, la la plaque de mousse est collée sur le panneau d'habillage intérieur.

Par ailleurs, l'invention a également pour objet un véhicule, notamment automobile, comportant d'une part une carrosserie à pavillon pourvu d'un panneau de tôle et d'autre part un habitacle dans lequel est disposé un panneau d'habillage intérieur de pavillon. Dans ce véhicule, le panneau d'habillage intérieur est celui d'un système conforme à l'invention dont le dispositif conforme à l'invention a sa plaque de mousse qui est interposée entre le panneau de tôle du pavillon et le panneau d'habillage intérieur de pavillon, en étant en contact avec au moins une zone déterminée du panneau de tôle du pavillon et avec au moins une zone déterminée du panneau d'habillage intérieur de pavillon.

Dans ce véhicule, la mousse est précontrainte entre les zones déterminées du panneau de tôle du pavillon et du panneau d'habillage intérieur de pavillon.

D'autres buts, caractéristiques et avantages de l'invention apparaîtront au cours de la description suivante d'un de ses modes de réalisation, donné à titre d'exemple non limitatif, en regard des dessins joints sur lesquels :
- la figure 1 est une vue schématique en perspective d'un véhicule équipé d'un dispositif d'insonorisation selon l'invention ;
- la figure 2 est une vue schématique en section selon la ligne II-II de la figure 1 ;
- les figures 3 et 4 sont des vues représentant schématiquement une tôle de pavillon de véhicule respectivement au repos et sous effet vibratoire ;
- la figure 5 est une vue schématique en perspective représentant le fonctionnement du dispositif d'insonorisation selon l'invention sous effet vibratoire.

Sur les différentes figures, les mêmes références désignent des éléments identiques ou similaires.

Dans la description qui va suivre, la direction désignée X est la direction longitudinale correspondant à l'axe d'avancement du véhicule, la direction désignée Y est transversale, la direction désignée Z est verticale, selon un repère orthonormé.

En se reportant aux figures, la référence 10 désigne un véhicule selon l'invention dont la carrosserie est pourvu de manière classique d'un pavillon comprenant un panneau de tôle 12 sensiblement horizontal. De manière connue, le panneau de tôle de pavillon 12 s'étend transversalement entre les brancards longitudinaux et longitudinalement entre une traverse supérieure avant et une traverse supérieure arrière. Ledit panneau 12 est soutenu par les brancards, les traverses et une traverse intermédiaire sensiblement à mi longueur entre les traverses avant et arrière, ces traverses et brancard de structure de caisse n'étant pas représentées aux figures.

Le véhicule comporte un panneau d'habillage intérieur 14 qui permet d'habiller le haut de l'habitacle afin de dissimuler le panneau de tôle de pavillon 12 de la vue des occupants de l'habitacle. Le panneau d'habillage intérieur 14 est fixé de manière classique à la structure de caisse du véhicule.

Interposé entre le panneau de tôle de carrosserie 12 et le panneau d'habillage intérieur 14, le véhicule 10 comporte deux dispositifs d'insonorisation 20, dans des zones susceptibles de bouger lorsqu'elles sont soumises à des sollicitations vibratoires ou des sollicitations mécaniques lors du lavage du véhicule ou lors de travaux de peinture par exemple.

Chacun des dispositifs d'insonorisation 20 est une plaque de mousse ayant des propriétés acoustiques en étant en contact sensiblement plan avec le panneau de tôle de carrosserie 12 et avec le panneau d'habillage intérieur 14. Le contact plan permet un contact suffisamment intime pour transmettre des vibrations ou des efforts entre la plaque de mousse et les panneaux.

L'épaisseur de la plaque de mousse varie entre 5 millimètres et 15 millimètres selon le modèle de véhicule à traiter acoustiquement, et plutôt dans un intervalle d'épaisseur de 5 à 8 millimètres. Dans le mode de réalisation représenté, l'épaisseur de la plaque de mousse est de 5 millimètres.

La plaque de mousse d'insonorisation est constituée d'une âme de mousse polymère imprégnée de façon homogène par un mélange comportant une charge minérale et un liant organique.

Le liant organique est à base d'acrylique, c'est-à-dire à base de poly-acrylonitrile.

Le polymère de l'âme est à base de polyuréthane sous forme de mousse de faible densité, par exemple de densité sensiblement égale à 18 kilogrammes par mètre cube, c'est-à-dire de densité comprise entre 14 kilogrammes par mètre cube et 22 kilogrammes par mètre cube. Lors de l'imprégnation de l'âme de mousse par le mélange, par exemple en le trempant dans un bain de mélange, le mélange rempli plus ou moins les pores de la mousse, le liant organique assurant la cohésion de la charge minérale avec l'âme de mousse.

La base acrylique et la charge minérale représentent respectivement quarante et soixante pour cent de la masse du mélange qui représente pour sa part quatre vingt pour cent du volume ou quatre vingt pour cent de la masse du produit final. La mousse polyuréthane formant l'âme de la plaque de mousse représente vingt pour cent du produit final. En variante, le mélange est à cinquante pour cent en masse de charge minérale et de liant organique.

Dans le mode de réalisation décrit, et qui constitue un exemple de réalisation ayant donné de bons résultats lors de tests d'insonorisation dans divers véhicules, la charge minérale est de la craie, c'est-à-dire principalement du calcaire, noté CaCO₃, et du silicate d'alumine appelé couramment argile. Dans un autre exemple de réalisation, la charge minérale est de l'argile.

La plaque de mousse d'insonorisation, après imprégnation par le mélange, est viscoélastique en ayant un toucher collant, mais n'est pas adhésive, si bien qu'elle doit être collée pour être fixée dans le véhicule entre le panneau de tôle de carrosserie 12 et le panneau d'habillage intérieur 14. La plaque de mousse est collée sur la face supérieure du panneau d'habillage intérieur 14, avant montage du panneau d'habillage intérieur 14 dans l'habitacle du véhicule 10. Le collage s'effectue dans une usine du constructeur automobile ou dans une usine de l'équipementier fournissant le panneau d'habillage intérieur au constructeur automobile.

Chacune des plaques de mousse d'insonorisation 20 est collée sur une zone déterminée du panneau d'habillage intérieur de pavillon, en regard d'une zone déterminée du pavillon qu'il est utile de traiter acoustiquement, lesdites zones étant différentes selon le modèle de véhicule à traiter acoustiquement.

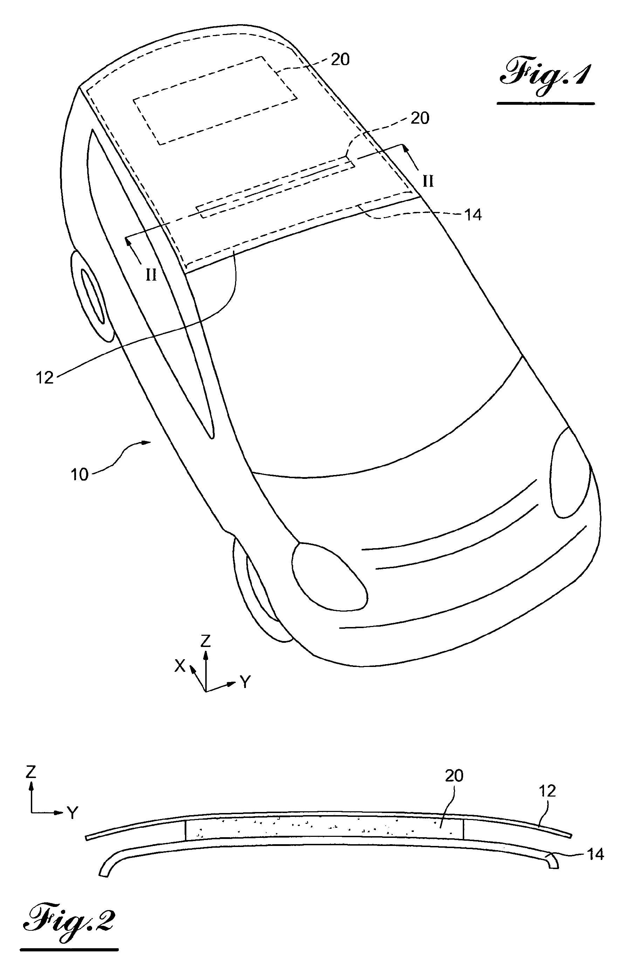

Dans le mode de réalisation représenté à la figure 1, les plaques de mousse 20 sont de contour rectangulaire. Une première plaque de mousse 20, de dimensions 400*100 millimètres, est disposée à mi longueur entre la traverse supérieure avant la traverse de milieu de pavillon. Une deuxième plaque de mousse 20, de dimensions 400*400 millimètres, est disposée à mi longueur entre la traverse supérieure arrière et la traverse de milieu de pavillon. En variante, d'autres formes, d'autres dimensions et d'autres emplacements d'une plaque de mousse d'insonorisation ou de plusieurs plaques de mousse d'insonorisation peuvent être prévus.

Le panneau d'habillage intérieur 14 équipé de sa plaque de mousse d'insonorisation 20 constitue un système d'habillage intérieur qui est monté dans l'habitacle du véhicule de manière que la plaque de mousse d'insonorisation 20 soit précontrainte, en étant comprimée par exemple de deux millimètres entre le panneau de tôle de carrosserie 12 et le panneau d'habillage intérieur 14.

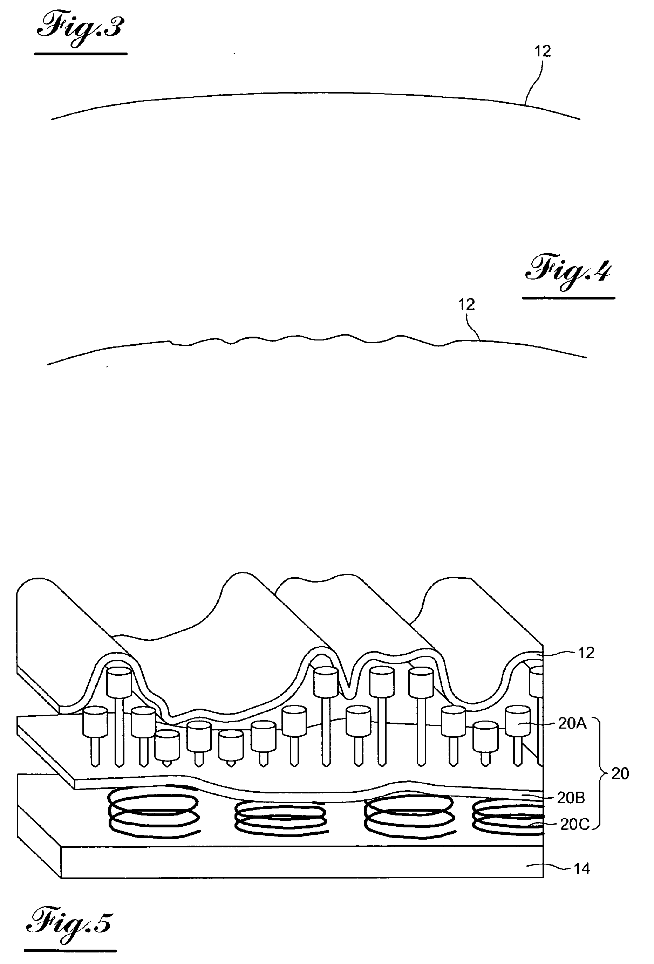

Le principe de fonctionnement du dispositif d'insonorisation et du système d'habillage selon l'invention est illustré en relation avec les figures 3 à 5.

A la figure 3, le panneau de tôle de pavillon 12 est représenté au repos et à la figure 4, il est représenté sous effet vibratoire, sa partie centrale entre les brancards et entre les traverses de structure de caisse étant déformée de manière ondulée.

L'invention permet de réduire la déformation du panneau de tôle de pavillon 12 sous effet vibratoire, afin de réduire les émissions acoustiques dudit panneau.

La plaque de mousse d'insonorisation 20 précontrainte entre le panneau de tôle de carrosserie 12 et le panneau d'habillage intérieur 14 agit comme une multitude de petits vérins venant amortir pour l'essentiel les vibrations du panneau de tôle de carrosserie 12. La figure 5 illustre le fonctionnement de la plaque de mousse 20 de manière didactique, en montrant la fonction de ses composants, sachant que la plaque de mousse 20 est globalement homogène de façon macroscopique et n'est pas en couches.

Dans la plaque de mousse d'insonorisation 20, l'âme de mousse polyuréthane se comporte comme des ressorts 20C qui permettent la mise en contrainte, en donnant sa rigidité au dispositif d'insonorisation. Représentée comme des amortisseurs 20A à la figure 5, la base d'acrylique du mélange d'imprégnation a un effet de liant qui maintient la charge minérale d'imprégnation et dissipe de l'énergie en transformant par frottement l'énergie mécanique des vibrations en chaleur. Représentée sous la forme d'une couche 20B à la figure 5, la charge minérale d'imprégnation a un effet de masse pour donner de l'inertie au dispositif d'insonorisation et dissiper de l'énergie en transformant par frottement l'énergie mécanique des vibrations en chaleur.

Avantageusement, le système d'habillage intérieur précité permet, de manière économique et de manière efficace :
- de réduire le bourdonnement du pavillon dû aux bruits de roulage tels que des percussions des roues sur le sol ou des vibrations de groupe moto propulseur transmises à la caisse et à la carrosserie du véhicule,
- d'absorber du bruit tel que du bruit de pluie sur la tôle et
- d'améliorer l'indentation du pavillon en ayant un effet de raidissement du pavillon permettant d'éviter par exemple une déformation du pavillon en le nettoyant par application avec force d'une éponge ou lors d'un ponçage avant réparation de tôlerie et peinture.

Avantageusement, la solution objet de l'invention est plus économique, plus légère et plus favorable en ergonomie de poste de travail et en temps de fabrication que les solutions habituellement utilisées pour l'insonorisation du pavillon d'un véhicule automobile, à savoir les plaques à base de goudron collée sur la tôle de carrosserie, les raidisseurs de type pièces en tôle, les cartons collés, les panneaux d'habillage intérieurs collés avec des colles posant des problème sanitaires et des problèmes de difficulté d'application.

## Revendications

1. Dispositif d'insonorisation pour habitacle de véhicule (10), destiné à être interposé entre un panneau de tôle de carrosserie (12) du véhicule et un panneau d'habillage intérieur (14), et qui comporte une plaque de mousse (20) à base de polymère imprégnée d'un mélange de charge minérale et de liant organique, la plaque de mousse (20) étant conformée pour être intimement en contact avec le panneau de tôle de carrosserie (12) et le panneau d'habillage intérieur (14) .

2. Dispositif selon la revendication précédente, **caractérisé en ce que** le polymère de la plaque de mousse (20) est à base de polyuréthane.

3. Dispositif selon l'une quelconque des revendications précédentes, **caractérisé en ce que** le liant organique du mélange est à base d'acrylique.

4. Dispositif selon l'une quelconque des revendications précédentes, **caractérisé en ce que** la charge minérale comporte du silicate d'alumine.

5. Dispositif selon la revendication précédente, **caractérisé en ce que** la charge minérale est de la craie.

6. Dispositif selon l'une quelconque des revendications précédentes, **caractérisé en ce que** le mélange est à 50% en masse de charge minérale et 50% en masse de liant organique.

7. Dispositif selon l'une quelconque des revendications précédentes, **caractérisé en ce que** le mélange est à 60% en masse de charge minérale et 40% en masse de liant organique.

8. Dispositif selon l'une quelconque des revendications précédentes, **caractérisé en ce que** la plaque de mousse (20) est de densité sensiblement égale à 18 kilogrammes par mètre cube.

9. Dispositif selon l'une quelconque des revendications précédentes, **caractérisé en ce que** la plaque de mousse (20) a une épaisseur comprise entre 5 millimètres et 15 millimètres.

10. Système d'habillage intérieur pour habitacle de véhicule, comportant un panneau d'habillage intérieur (14) permettant d'habiller un panneau de tôle de carrosserie (12) du véhicule, **caractérisé en ce qu'**il comporte un dispositif conforme à l'une quelconque des revendications précédentes dont la plaque de mousse (20) est intimement solidaire d'une face supérieure du panneau d'habillage intérieur (14) de manière que la plaque de mousse (20) puisse être interposée entre le panneau d'habillage intérieur (14) et le panneau de tôle de carrosserie (12), en étant intimement en contact avec ce dernier.

11. Système selon la revendication précédente, **caractérisé en ce que** la plaque de mousse (20) est collée sur le panneau d'habillage intérieur (14).

12. Véhicule, notamment automobile, comportant d'une part une carrosserie à pavillon pourvu d'un panneau de tôle (12) et d'autre part un habitacle dans lequel est disposé un panneau d'habillage intérieur (14) de pavillon, **caractérisé en ce que** le panneau d'habillage intérieur (14) est celui d'un système conforme à l'une quelconque des revendications 10 à 11 dont le dispositif conforme à l'une des revendications 1 à 8 a sa plaque de mousse (20) qui est interposée entre le panneau de tôle du pavillon (12) et le panneau d'habillage intérieur (14) de pavillon, en étant en contact avec au moins une zone déterminée du panneau de tôle du pavillon et avec au moins une zone déterminée du panneau d'habillage intérieur de pavillon.

13. Véhicule selon la revendication précédente, **caractérisé en ce que** la mousse (20) est précontrainte entre les zones déterminées du panneau de tôle du pavillon (12) et du panneau d'habillage intérieur de pavillon (14).

## Patentansprüche

1. Vorrichtung zur Schalldämmung der Fahrgastzelle eines Fahrzeugs (10), die zum Einsetzen zwischen einem Karosserieblech (12) des Fahrzeugs und einem Innenverkleidungspaneel (14) bestimmt ist, und die eine Schaumstoffplatte (20) basierend auf einem Polymer umfasst, die mit einer Mischung aus einem mineralischen Füllstoff und einem organischen Bindemittel imprägniert ist, und die Schaumstoffplatte (20) derart ausgeformt ist, dass sie so eng wie möglich am Karosserieblech (12) und am Innenverkleidungspaneel (14) anliegt.

2. Vorrichtung nach dem vorherigen Anspruch, **dadurch gekennzeichnet, dass** das Polymer der Schaumstoffplatte (20) auf Polyurethan basiert.

3. Vorrichtung nach irgendeinem der vorherigen Ansprüche, **dadurch gekennzeichnet, dass** das organische Bindemittel der Mischung auf Acryl basiert.

4. Vorrichtung nach irgendeinem der vorherigen Ansprüche, **dadurch gekennzeichnet, dass** der mineralische Füllstoff Aluminiumsilikat enthält.

5. Vorrichtung nach dem vorherigen Anspruch, **dadurch gekennzeichnet, dass** der mineralische Füllstoff Kreide ist.

6. Vorrichtung nach irgendeinem der vorherigen Ansprüche, **dadurch gekennzeichnet, dass** die Mischung 50% Massenanteile an mineralischem Füllstoff und 50% Massenanteile an organischem Bindemittel enthält.

7. Vorrichtung nach irgendeinem der vorherigen Ansprüche, **dadurch gekennzeichnet, dass** die Mischung 60% Massenanteile an mineralischem Füllstoff und 40% Massenanteile an organischem Bindemittel enthält.

8. Vorrichtung nach irgendeinem der vorherigen Ansprüche, **dadurch gekennzeichnet, dass** die Schaumstoffplatte (20) eine Dichte aufweist, die in etwa 18 Kilogramm pro Kubikmeter entspricht.

9. Vorrichtung nach irgendeinem der vorherigen Ansprüche, **dadurch gekennzeichnet, dass** die Schaumstoffplatte (20) eine Dicke zwischen 5 Millimetern und 15 Millimetern aufweist.

10. Innenverkleidungssystem für die Fahrgastzelle eines Fahrzeugs, umfassend ein Innenverkleidungspaneel (14) zum Verkleiden eines Karosserieblechs (12) des Fahrzeugs, **dadurch gekennzeichnet, dass** es eine Vorrichtung nach irgendeinem der vorherigen Ansprüche umfasst, deren Schaumstoffplatte (20) fest mit einer Oberseite des Innenverkleidungspaneels (14) verbunden ist, sodass die Schaumstoffplatte (20) zwischen dem Innenverkleidungspaneel (14) und dem Karosserieblech (12) des Fahrzeugs eingesetzt werden kann, und eng an letzterem anliegt.

11. System nach dem vorherigen Anspruch, **dadurch gekennzeichnet, dass** die Schaumstoffplatte (20) auf das Innenverkleidungspaneel (14) geklebt wird.

12. Fahrzeug, im Speziellen ein Kraftfahrzeug, umfassend einerseits eine Karosserie mit einem Dach, das mit einem Karosserieblech (12) versehen ist, und andererseits eine Fahrgastzelle, in der ein Innenverkleidungspaneel (14) des Daches angeordnet ist, **dadurch gekennzeichnet, dass** das Innenverkleidungspaneel (14) jenes eines Systems nach irgendeinem der Ansprüche 10 bis 11 ist, dessen Vorrichtung nach einem der Ansprüche 1 bis 8 seine Schaumstoffplatte (20) aufweist, die zwischen dem Karosserieblech (12) und dem Innenverkleidungspaneel (14) des Daches eingesetzt ist, und in Kontakt mit zumindest einem vorbestimmten Bereich des Karosserieblechs des Daches und mit zumindest einem vorbestimmten Bereich des Innenverkleidungspaneels des Daches steht.

13. Fahrzeug nach dem vorherigen Anspruch, **dadurch gekennzeichnet, dass** die Schaumstoffplatte (20) zwischen den vorbestimmten Bereichen des Karosserieblechs des Daches (12) und des Innenverkleidungspaneels des Daches (14) vorgespannt ist.

## Claims

1. Soundproofing device for the passenger compartment of a vehicle (10), intended to be positioned between a sheet metal panel of the vehicle bodywork (12) and an inner trimming panel (14), and which comprises a polymer foam plate (20) impregnated with a mixture of an inorganic filler and an organic binder, with the foam plate (20) being shaped so as to be in close contact with the sheet metal panel of the bodywork (12) and the inner trimming panel (14).

2. Device as claimed in the preceding claim, **characterised in that** the polymer of the foam plate (20) has a polyurethane base.

3. Device as claimed in any preceding claim, **characterised in that** the organic binder of the mixture has an acrylic base.

4. Device as claimed in any preceding claim, **characterised in that** the inorganic filler comprises aluminium silicate.

5. Device as claimed in the preceding claim, **characterised in that** the inorganic filler is chalk.

6. Device as claimed in any preceding claim, **characterised in that** the mixture is 50% by weight inorganic filler and 50% by weight organic binder.

7. Device as claimed in any preceding claim, **characterised in that** the mixture is 60% by weight inorganic filler and 40% by weight organic binder.

8. Device as claimed in any preceding claim, **characterised in that** the foam plate (20) has a density substantially equal to 18 kilograms per cubic metre.

9. Device as claimed in any preceding claim, **characterised in that** the foam plate (20) has a thickness between 5 millimetres and 15 millimetres.

10. Inner trimming system for the passenger compartment of a vehicle, comprising an inner trimming panel (14) making it possible to cover a sheet metal panel of the vehicle bodywork (12), **characterised in that** it comprises a device in accordance with any of the preceding claims of which the foam plate (20) is closely integral with the upper surface of the inner trimming panel (14) in such a way that the foam plate (20) can be positioned between the inner trimming panel (14) and the sheet metal panel of the bodywork (12), by being in close contact with the latter.

11. System as claimed in the preceding claim, **characterised in that** the foam plate (20) is glued onto the inner trimming panel (14).

12. Vehicle, in particular a motor vehicle, comprising on the one hand a bodywork with a roof provided with a sheet metal panel (12) and on the other hand a passenger compartment wherein is arranged an inner trimming panel (14) of a roof, **characterised in that** the inner trimming panel (14) is that of a system in accordance with any one of claims 10 to 11 of which the device in accordance with one of claims 1 to 8 has its foam plate (20) which is positioned between the sheet metal panel of the roof (12) and the inner trimming panel (14) of a roof, being in contact with at least one determined zone of the sheet metal panel of the roof and with at least one determined zone of the inner trimming panel of a roof.

13. Vehicle as claimed in the preceding claim, **characterised in that** the foam (20) is pre-stressed between the determined zones of the sheet metal panel of the roof (12) and of the inner trimming panel of the roof (14).
